# EUROPÄISCHE PATENTSCHRIFT

(11) **EP 3 428 754 B1**
(45) Veröffentlichungstag und Bekanntmachung des Hinweises auf die Patenterteilung: **15.02.2023**
(21) Anmeldenummer: 17181212.6
(22) Anmeldetag: 13.07.2017
(51) Int. Cl.: G05B 19/423, B25J 9/00

(54) **VERFAHREN ZUM EINRICHTEN EINES BEWEGUNGSAUTOMATEN UND EINRICHTUNGSANORDNUNG**
METHOD FOR SETTING UP A KINETIC DEVICE AND SETUP ASSEMBLY
PROCÉDÉ D'INSTALLATION D'UN AUTOMATE DE MOUVEMENT ET SYSTÈME D'INSTALLATION

(43) Veröffentlichungstag der Anmeldung: 16.01.2019
(73) Patentinhaber: Siemens Aktiengesellschaft, 80333 München (DE)
(72) Erfinder: Schwarz, Andreas, 90562 Kalchreuth (DE)

(56) Entgegenhaltungen:
- EP-A1- 0 333 874
- EP-A2- 2 540 454
- WO-A1-2014/053115
- WO-A2-2006/101893
- DE-A1- 19 943 318
- DE-A1-102015 221 337
- JP-A- 2008 254 097
- Zeeshan Shareef: "Path Planning and Trajectory Optimization of Delta Parallel Robot", , 7. Mai 2015 (2015-05-07), XP055369326, Gefunden im Internet: URL:https://www.hni.uni-paderborn.de/en/pu blications/publikationen/ [gefunden am 2017-05-04]

## Beschreibung

Die Erfindung betrifft ein Verfahren zum Einrichten eines Bewegungsautomaten. Ein zweiter Aspekt der Erfindung betrifft eine Einrichtungsanordnung.

Um einen Bewegungsautomaten automatisiert und sicher in einem vorgegebenen Arbeitsbereich betreiben zu können, wird der Bewegungsautomat zuvor eingerichtet, wobei beispielsweise in einem Steuergerät des Bewegungsautomaten Arbeitsabläufe bzw. Bewegungsabläufe hinterlegt werden, anhand welcher der Bewegungsautomat im automatisierten Betrieb arbeiten kann. Das Einrichten wird häufig auch als "teachen" bezeichnet.

Während des Einrichtens besteht vor allem bei hochdynamischen Bewegungsautomaten die Gefahr, dass diese unerwünschte Bewegungen vollziehen und dadurch sicherheitsrelevante Grenzwerte und/oder den Arbeitsbereich zumindest bereichsweise überschreiten. Im ungünstigsten Fall können dadurch Personen, welche sich neben dem Arbeitsbereich aufhalten, verletzt werden.

Die Offenlegungsschrift DE 10 2015 221 337 A1 zeigt ein Verfahren und ein Steuerungssystem zum Steuern der Bewegungen von Gelenkarmen eines Industrieroboters sowie ein dazu eingesetztes Bewegungsvorgabemittel. Ein Industrieroboter wird mit einem durch eine Bedienperson händisch zu führenden Bewegungsvorgabemittel zu Bewegungen veranlasst. Dessen Bewegungen werden zur Generierung von Bewegungsdaten für den zu steuernden Industrieroboter eingesetzt. An verstellbaren Gelenkarmen des Industrieroboters ist wenigstens eine von mehreren Referenzmarken angeordnet. Das Bewegungsvorgabemittel weist zumindest einen bildgebenden und/oder zumindest einen abstandssensitiven Sensor auf. Während einer Bewegung des Bewegungsvorgabemittels wird zumindest der die jeweils selektierte Referenzmarke tragende Gelenkarm den Bewegungen des Bewegungsvorgabemittels steuerungstechnisch nachgeführt.

Die Druckschrift WO 2006/101893 A2 offenbart einen parallelen Roboter. Dieser Roboter weist eine Blattform, einen Hauptarm sowie einen ersten und zweiten Unterstützungsarm auf. Mit Hilfe der Unterstützungsarme kann ein Objekt in einem zylinderförmigen Raum positioniert und ausgerichtet werden. Der Hauptarm beinhaltet eine Endkomponente zum Halten des Objekts und Verbindungsmittel, um eine Neigung der Endkomponente in Bezug zur Plattform herzustellen. Der Roboter kann mit einem zusätzlichen Motor ausgestattet sein, um das Objekt auszurichten. Als Beispiel wird ein SCARA-Roboter erwähnt.

Die Dissertation "Path Planning and Trajectory Opimization of Delta Parallel Robot" von Zeeshan Shareef aus Karachi, Pakistan, vorgelegt an der Fakultät für Maschinenbau der Universität Paderborn beschreibt, wie im Rahmen von Industrierobotern eine Pfadplanung und Trajektorienoptimierung verbessert werden kann. Diese Methoden werden hinsichtlich ihrer Genauigkeit und rechentechnischen Effizienz untersucht. Des Weiteren wird eine Optimierung der Trajektorien für Industrieroboter behandelt. Dazu werden drei unterschiedliche Methoden, die Phase-Plane Methode, die dynamische Programmierung und diskrete mechanische und optimale Kontrollmethode diskutiert. Mit Hilfe von zwei nummerischen Beispielen wird ein Vergleich dieser Methoden durchgeführt. Die Methoden zur Pfadplanung sowie zur Trajektorienoptimierung werden in einer einzigen Methode zusammengefasst.

Die Offenlegungsschrift JP 2008254097 zeigt eine Methode zum Berechnen der Relativposition zwischen mehreren Robotern, die kooperierend arbeiten. Die Flanschflächen im Arm mehrerer Roboter werden dabei verbunden. Es werden Datenmessungen durchgeführt, die Position und Haltung jedes Roboters aufnehmen. Daraus wird die Relativposition ermittelt.

Aufgabe der vorliegenden Erfindung ist es, ein Verfahren zum Einrichten eines Bewegungsautomaten sowie eine Einrichtungsanordnung zu schaffen, durch welche ein derartiges Überschreiten einer vorgegebenen Geschwindigkeitsgrenze oder des Arbeitsbereichs verhindert werden kann.

Diese Aufgabe wird erfindungsgemäß gelöst durch ein Verfahren mit den Merkmalen des Patentanspruchs 1 sowie durch eine Einrichtungsanordnung mit den Merkmalen des Patentanspruchs 8. Vorteilhafte Ausführungsformen mit zweckmäßigen Weiterbildungen der Erfindung sind Gegenstand der Unteransprüche. Die Ausführungen zu einem der Aspekte der Erfindung, insbesondere zu einzelnen Merkmalen dieses Aspektes, gelten entsprechend auch analog für den anderen Aspekt der Erfindung und umgekehrt.

Ein erster Aspekt der Erfindung betrifft ein Verfahren zum Einrichten eines Bewegungsautomaten, umfassend zumindest die Schritte:
a) Koppeln eines bewegbaren Elements des Bewegungsautomaten mit einem bewegbaren Führungselement einer Führungsvorrichtung, wobei die Führungsvorrichtung als ein mehrgliedriger Führungsroboter ausgebildet ist;
b) Kraftausübung auf das bewegbare Element durch das bewegbare Führungselement durch Betreiben der Führungsvorrichtung, wodurch das bewegbare Element mittels des Führungselements entlang eines vorbestimmten Bewegungsverlaufs geführt bewegt wird, wobei das bewegbare Element vor oder während der Kraftausübung in Schritt b) in einen Passivzustand versetzt wird, in welchem das bewegbare Element von einer zum Bewegen des bewegbaren Elements ausgebildeten Antriebsvorrichtung des Bewegungsautomaten entkoppelt ist;
c) Erfassen eines den Bewegungsverlauf charakterisierenden Einrichtungsdatensatzes und dadurch Einrichten des Bewegungsautomaten, wobei der Bewegungsverlauf wenigstens einen Geschwindigkeitsverlauf umfasst und der wenigstens eine Geschwindigkeitsverlauf proportional zu einem sich über der Zeit ändernden Arbeitsgeschwindigkeitsverlauf des bewegbaren Elements ist.

Durch die Kraftausübung auf das bewegbare Element des bewegbaren Führungselements kann ein besonders kontrolliertes, geführtes Bewegen des bewegbaren Elements beim Einrichten erfolgen, wodurch ein ungewolltes Überschreiten eines Arbeitsbereichs und/oder eines Geschwindigkeitsgrenzwerts des Bewegungsautomaten wirksam unterbunden werden kann.

Das bewegbare Element kann bevorzugt ausschließlich durch die Kraftausübung mittels des Führungselements bewegt werden. Dadurch ist ein Überschreiten des Arbeitsbereichs und/oder des Geschwindigkeitsgrenzwerts infolge eines Betriebs des Bewegungsautomaten ausgeschlossen zumal der Bewegungsautomat dann nicht zur Bewegung des bewegbaren Elements beiträgt.

Beim Erfassen des Einrichtungsdatensatzes kann der Einrichtungsdatensatz in einem zum Steuern des Bewegungsautomaten ausgebildeten Steuergerät gespeichert werden. Der Bewegungsautomat kann das Steuergerät umfassen.

Der Bewegungsverlauf kann wenigstens zwei Koordinatenpunkte umfassen. Anhand der Koordinatenpunkte können Haltepunkte vorgegeben werden, an welchen das bewegbare Element nach erfolgtem Einrichten des Bewegungsautomaten bei einem automatisierten Betrieb bei welchem beispielsweise Kommissionierprozesse oder Sortierprozesse mittels des Bewegungsautomaten durchgeführt werden können, gezielt angehalten werden kann.

Bevorzugt umfasst der Bewegungsverlauf wenigstens eine Krümmung. Dadurch kann eine besonders große Bewegungsfreiheit erzielt und beispielsweise eine Bewegung des bewegbaren Elements um ein Hindernis herum bewirkt werden.

Denkbar ist auch, dass das bewegbare Element durch das bewegbare Führungselement in wenigstens zwei voneinander verschiedene Arbeitszustände verstellt wird. Dies ist von Vorteil, da hierdurch ein besonders gezieltes Einrichten des Bewegungsautomaten erfolgen kann. Das bewegbare Element kann hierbei beispielsweise als Greifwerkzeug des Bewegungsautomaten ausgebildet sein. Die wenigstens zwei voneinander verschiedenen Arbeitszustände können beispielsweise einem Greifzustand und einem Öffnungszustand des Greifwerkzeugs entsprechen.

Der Bewegungsautomat kann in vorteilhafter Weise eine im Vergleich zu der Führungsvorrichtung größere Dynamik aufweisen. Dies ist von Vorteil, da dementsprechend die Führungsvorrichtung eine größere dynamische Trägheit als der Bewegungsautomat aufweist, wodurch die Führungsvorrichtung einfacher geregelt und gesteuert werden kann, als der Bewegungsautomat. Von besonderem Vorteil ist hierbei, dass die Führungsvorrichtung hierdurch einfacher als der Bewegungsautomat durch eine Sicherheitssteuerung überwacht werden kann.

Die Erfindung sieht vor, dass das bewegbare Element vor oder während der Kraftausübung in Schritt b) in einen Passivzustand versetzt wird, in welchem das bewegbare Element von einer zum Bewegen des bewegbaren Elements ausgebildeten Antriebsvorrichtung des Bewegungsautomaten entkoppelt ist. Dies ist von Vorteil, da hierdurch eine besonders ungehinderte und damit energiesparende, geführte Bewegung des bewegbaren Elements mittels des bewegbaren Führungselements ermöglicht ist.

Der Passivzustand kann bevorzugt unmittelbar vor der Kraftausübung eingestellt werden. Dadurch kann das bewegbare Element vor dessen Koppeln mit dem bewegbaren Führungselement in einer Ruhestellung gehalten werden, sodass das Koppeln besonders ungehindert erfolgen kann.

In dem Passivzustand ist das bewegbare Element antriebsentkoppelt, sodass das bewegbare Element nicht durch Betreiben des Bewegungsautomaten bewegt wird, sondern stattdessen aufwandsarm durch das bewegbare Führungselement bewegt werden kann.

In einer weiteren vorteilhaften Weiterbildung der Erfindung wird vor oder während der Kraftausübung in Schritt b) wenigstens eine Haltebremse des Bewegungsautomaten von einer, eine Bewegung des bewegbaren Elements unterbindenden Bremsstellung in eine, die Bewegung des bewegbaren Elements ermöglichende, weitere Stellung geschaltet. Dies ist von Vorteil, da hierdurch das Bewegen des bewegbaren Elements zumindest unter reduziertem Bremswiderstand und damit verringertem Energieaufwand erfolgen kann.

Bei der weiteren Stellung kann die Haltebremse vollständig geöffnet sein. Dadurch ist ein besonders aufwandsarmes Bewegen des bewegbaren Elements ermöglicht.

Alternativ dazu kann bei der weiteren Stellung auch eine, zur Bewegung des bewegbaren Elements durch die Kraftausübung zu überwindende Bremskraft durch die Haltebremse ausgeübt werden. Dies ist von Vorteil, da hierdurch ein Bewegen des bewegbaren Elements entgegen dieser Bremskraft erfolgt, wobei durch die wirkende Bremskraft ein besonders schnelles Abbremsen des bewegbaren Elements erfolgen kann, sobald die Kraftausübung unterbrochen oder beendet wird. Dadurch ist beim Einrichten eine besonders hohe Sicherheit gewährleistet.

In einer weiteren vorteilhaften Weiterbildung der Erfindung wird das bewegbare Element während der Kraftausübung in Schritt b) entgegen einer auf das bewegbare Element wirkenden Schwerkraft durch das Führungselement gehalten. Dies ermöglicht es in vorteilhafter Weise jeweilige, das bewegbare Element vor einem Herunterfallen hindernde Bremsen des Bewegungsautomaten zu lösen, sodass das bewegbare Element besonders ungehindert durch das bewegbare Führungselement bewegt werden kann.

In einer weiteren vorteilhaften Weiterbildung der Erfindung wird beim Erfassen des Einrichtungsdatensatzes in Schritt c) wenigstens ein Sensorwert eines dem Bewegungsautomaten zugeordneten Bewegungssensors herangezogen. Dies ist von Vorteil, da der Einrichtungsdatensatz durch das Heranziehen des dem Bewegungsautomaten zugeordneten Bewegungssensors bereits während des Einrichtens auf ein Koordinatensystem des Bewegungsdatensatzes bezogen werden kann. Dadurch kann in vorteilhafter Weise auf eine Umrechnung des Bewegungsverlaufs zwischen verschiedenen Koordinatensystemen, beispielsweise durch Koordinatentransformation, verzichtet werden.

In einer weiteren vorteilhaften Weiterbildung der Erfindung wird als der Bewegungsautomat ein mehrachsiger Roboter, insbesondere ein Delta-Picker, herangezogen. Dies ist von Vorteil, da hierdurch besonders viele Freiheitsgrade bei der Bewegung des bewegbaren Elements bestehen. Unter dem Begriff "mehrachsiger Roboter" ist dabei insbesondere ein mit mehreren Bewegungsachsen versehener Roboter zu verstehen. Der Bewegungsautomat kann dementsprechend als mehrgliedriger Roboter ausgebildet sein, wobei das bewegbare Element einem Glied des Roboters oder einem Werkzeug entsprechen kann.

Die Erfindung sieht vor, als die Führungsvorrichtung einen mehrgliedrigen Führungsroboter, insbesondere ein SCARA-Roboter, heranzuziehen. Dies ist von Vorteil, da aufgrund der unterschiedlichen Glieder des Führungsroboters besonders viele Freiheitsgrade bei der Bewegung bestehen. Unter dem Begriff "Führungsroboter" ist dabei zu verstehen, dass die Führungseinrichtung als Roboter ausgebildet ist, mittels welchem die Bewegung des bewegbaren Elements des Bewegungsautomaten geführt durchführbar ist.

Die Führungsvorrichtung kann vorzugsweise auch als SCARA-Roboter (SCARA = Selective Compliance Assembly Robot Arm) ausgebildet sein. Ein derartiger Roboter ist in dessen Bewegung in vorteilhafter Weise einem menschlichen Arm nachempfunden.

Der Bewegungsverlauf umfasst wenigstens einen Geschwindigkeitsverlauf und/oder wenigstens einen Beschleunigungsverlauf des bewegbaren Elements. Dies ist von Vorteil, da durch den Geschwindigkeitsverlauf bzw. den Beschleunigungsverlauf die Dynamik des Bewegungsverlaufs vorgegeben werden kann. Dies ermöglicht es beim Einrichten des Bewegungsautomaten auch Bewegungszeiten zu berücksichtigen.

Gemäß der Erfindung ist der wenigstens eine Geschwindigkeitsverlauf proportional zu einem, sich über der Zeit ändernden Arbeitsgeschwindigkeitsverlauf des bewegbaren Elements. Dies ist von Vorteil, da hierdurch über einen konstanten Geschwindigkeitsfaktor und damit besonders aufwandsarm eine Umrechnung zwischen dem beim Einrichten eingestellten Geschwindigkeitsverlauf und dem Arbeitsgeschwindigkeitsverlauf erfolgen kann. Der Arbeitsgeschwindigkeitsverlauf umfasst dabei die beim automatisierten Betrieb und damit beim automatisierten Arbeiten (automatisierten Betrieb) des Bewegungsautomaten vorgegebenen Geschwindigkeiten, welche auch als Arbeitsgeschwindigkeiten bezeichnet werden können.

In einer weiteren vorteilhaften Weiterbildung der Erfindung ist der wenigstens eine Beschleunigungsverlauf proportional zu einem, sich über der Zeit ändernden Arbeitsbeschleunigungsverlauf des bewegbaren Elements. Dies ist von Vorteil, da hierdurch über einen konstanten Beschleunigungsfaktor und damit besonders aufwandsarm eine Umrechnung zwischen dem beim Einrichten eingestellten Beschleunigungsverlauf und dem Arbeitsbeschleunigungsverlauf erfolgen kann. Der Arbeitsbeschleunigungsverlauf umfasst dabei die beim automatisierten Betrieb und damit beim automatisierten Arbeiten des Bewegungsautomaten vorgegebenen Beschleunigungen, welche auch als Arbeitsbeschleunigungen bezeichnet werden können.

Ein zweiter Aspekt der Erfindung betrifft eine Einrichtungsanordnung, welche einen Bewegungsautomaten, mit einem bewegbaren Element sowie eine als ein mehrgliedriger Führungsroboter ausgebildete Führungsvorrichtung mit einem bewegbaren Führungselement umfasst, bei welcher das bewegbare Element des Bewegungsautomaten mit dem bewegbaren Führungselement der Führungsvorrichtung gekoppelt ist, welche zur Kraftausübung auf das bewegbare Element mittels des bewegbaren Führungselements durch Betreiben der Führungsvorrichtung ausgebildet ist, wodurch das bewegbare Element durch das bewegbare Führungselement entlang eines vorbestimmten Bewegungsverlaufs geführt bewegbar ist, und mittels welcher ein den Bewegungsverlauf charakterisierender Einrichtungsdatensatz erfassbar und dadurch der Bewegungsautomat einrichtbar ist, wobei das bewegbare Element vor oder während der Kraftausübung in einen Passivzustand versetzt ist, in welchem das bewegbare Element von einer zum Bewegen des bewegbaren Elements ausgebildeten Antriebsvorrichtung des Bewegungsautomaten entkoppelt ist. Der Bewegungsverlauf umfasst wenigstens einen Geschwindigkeitsverlauf und der wenigstens eine Geschwindigkeitsverlauf ist proportional zu einem sich über der Zeit ändernden Arbeitsgeschwindigkeitsverlauf des bewegbaren Elements ist. Durch die Einrichtungsanordnung kann ein unzulässiges Überschreiten eines Arbeitsbereichs und/oder des Geschwindigkeitsgrenzwerts des Bewegungsautomaten während des Einrichtens des Bewegungsautomaten unterbunden werden. Die Einrichtungsanordnung ist zur Durchführung eines Verfahrens gemäß dem ersten Aspekt der Erfindung ausgebildet.

Die vorliegende Erfindung wird nun anhand der beigefügten Zeichnungen näher erläutert, in denen zeigen:
- FIG 1: eine Perspektivansicht einer Einrichtungsanordnung mit einem Bewegungsautomaten und einer Führungsvorrichtung; und
- FIG 2: ein Ablaufdiagramm eines Verfahrens zum Einrichten des Bewegungsautomaten.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen im Rahmen der Ansprüche realisiert werden können.

Insbesondere können in diesem Rahmen auch Kombinationen mit den eingangs erwähnten Merkmalen aus dem Stand der Technik erfolgen.

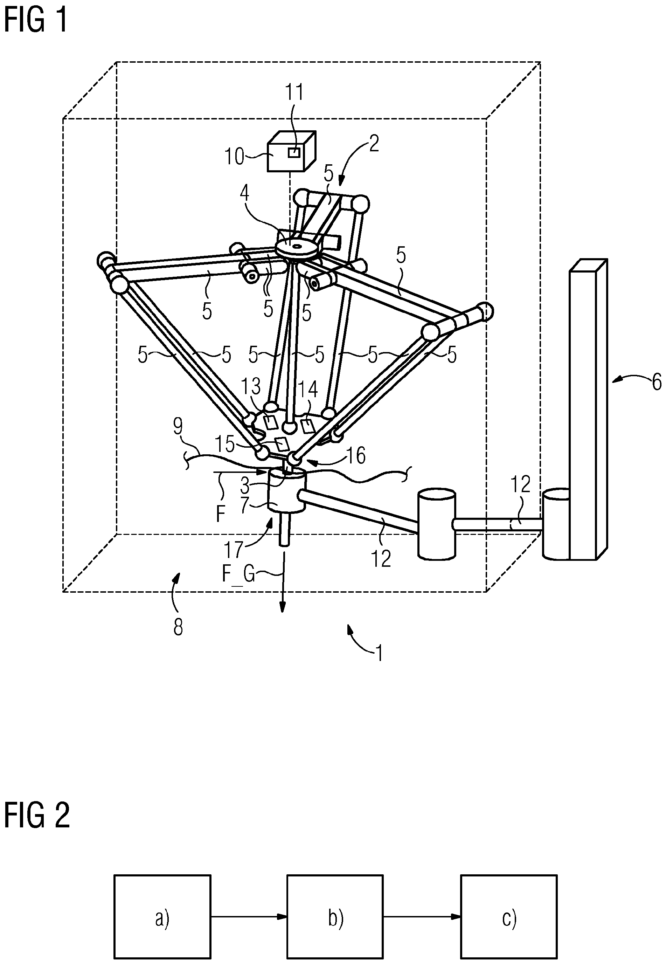

FIG 1 zeigt eine Perspektivansicht einer Einrichtungsanordnung 1, welche einen Bewegungsautomaten 2, mit einem bewegbaren Element 3 sowie eine Führungsvorrichtung 6 mit einem bewegbaren Führungselement 7 umfasst. Der Bewegungsautomat 2 ist vorliegend als Delta-Picker ausgebildet. Die Führungsvorrichtung 6 ist vorliegend als SCARA-Roboter ausgebildet.

Das bewegbare Element 3 ist vorliegend als Werkzeug des Bewegungsautomaten 2 ausgebildet und an einem freien Ende 16 des Bewegungsautomaten 2 angeordnet.

Das bewegbare Führungselement 7 ist vorliegend an einem freien Ende 17 der Führungsvorrichtung 6 angeordnet. Das Führungselement 7 ist mittels eines hier nicht weiter gezeigten Antriebs der Führungsvorrichtung 6 über mehrere Führungsglieder 12 der Führungsvorrichtung 6 geführt bewegbar.

Das bewegbare Element 3 ist über eine Mehrzahl an bewegbaren Gliedern 5 des Bewegungsautomaten 2 mit einer Basis 4 des Bewegungsautomaten 2 verbunden und dadurch relativ zu der Basis 4 bewegbar. Über die Basis 4 kann der Bewegungsautomat 2 beispielsweise bewegbar an einer Hallendecke gelagert sein.

Um den Bewegungsautomaten 2 automatisiert zu betreiben und dabei das bewegbare Element 3 beispielsweise relativ zur Basis 4 zu bewegen, umfasst der Bewegungsautomat 2 eine vorliegend lediglich schematisch dargestellte Antriebsvorrichtung 13. Zudem umfasst der Bewegungsautomat 2 eine Haltebremse 14 mittels welcher das bewegbare Element 3 festgehalten werden kann. Die Antriebsvorrichtung 13 sowie die Haltebremse 14 sind signalübertragend mit einem Steuergerät 10 des Bewegungsautomaten 2 gekoppelt. Dadurch kann die Antriebsvorrichtung 13 mittels des Steuergeräts 10 angesteuert werden, um das bewegbare Element 3 gezielt zu bewegen und beispielsweise Kommissionierprozesse oder Sortierprozesse beim automatischen Betrieb des Bewegungsautomaten 2 durchzuführen. Zudem kann die Haltebremse 14 mittels des Steuergeräts 10 zwischen einer Bremsstellung, in welcher die Bewegung des bewegbaren Elements 3 ermöglicht ist und zumindest einer weiteren Stellung geschaltet werden.

Das bewegbare Element 3 des Bewegungsautomaten 2 ist bei der Einrichtungsanordnung 1 mit dem bewegbaren Führungselement 7 der Führungsvorrichtung 6 gekoppelt. Dadurch erhält das bewegbare Führungselement 7 das bewegbare Element 3 entgegen der auf das bewegbare Element 3 wirkenden Schwerkraft F_G.

Die Einrichtungsanordnung 1 ist zur Kraftausübung auf das bewegbare Element 3 mittels des bewegbaren Führungselements 7 durch Betreiben der Führungsvorrichtung 6 ausgebildet.

Infolge der Kraftausübung ist das bewegbare Element 3 durch das bewegbare Führungselement 7 entlang eines vorbestimmten Bewegungsverlaufs 9 geführt innerhalb eines Arbeitsbereichs 8 des Bewegungsautomaten 2 bewegbar.

Um einen, den Bewegungsverlauf 9 charakterisierenden Einrichtungsdatensatz 11, anhand welchem der Bewegungsautomat 2 automatisiert betrieben werden kann, zu erfassen, umfasst der Bewegungsautomat 2 einen Bewegungssensor 15, welcher vorliegend an dem bewegbaren Element 3 angeordnet ist, und welcher zur Positionserfassung, zur Geschwindigkeitserfassung sowie zur Beschleunigungserfassung ausgebildet ist. Der mittels des Bewegungssensors 15 erfasste Einrichtungsdatensatz 11 kann in dem Steuergerät 10 abgespeichert werden, um den Bewegungsautomaten 2 einzurichten.

Nach erfolgtem Einrichten kann der Bewegungsautomat 2 basierend auf dem Einrichtungsdatensatz 11 automatisiert betrieben werden.

Die Einrichtungsanordnung 1 ist allgemein zur Durchführung eines Verfahrens zum Einrichten des Bewegungsautomaten 2 ausgebildet, wobei einzelne Verfahrensschritte a), b), c) schematisch in einem in FIG 2 gezeigten Ablaufdiagramm dargestellt sind.

In Schritt a) erfolgt das Koppeln des bewegbaren Elements 3 des Bewegungsautomaten 2 mit dem bewegbaren Führungselement 7 der Führungsvorrichtung 6.

In Schritt b) erfolgt die Kraftausübung auf das bewegbare Element 3 durch das bewegbare Führungselement 7 durch Betreiben der Führungsvorrichtung 6, wodurch das bewegbare Element 3 mittels des Führungselements 7 entlang des vorbestimmten Bewegungsverlaufs 9 geführt bewegt wird.

In Schritt c) erfolgt das Erfassen des den Bewegungsverlauf 9 charakterisierenden Einrichtungsdatensatzes 11 und dadurch das Einrichten des Bewegungsautomaten 2.

Das bewegbare Element 3 wird vorliegend vor der Kraftausübung in Schritt b) in einen Passivzustand versetzt, in welchem das bewegbare Element 3 von der zum Bewegen des bewegbaren Elements 3 ausgebildeten Antriebsvorrichtung 13 des Bewegungsautomaten 2 entkoppelt ist.

Vor der Kraftausübung in Schritt b) wird zudem die Haltebremse 14 des Bewegungsautomaten 2 von der, die Bewegung des bewegbaren Elements 3 unterbindenden Bremsstellung in die, die Bewegung des bewegbaren Elements 3 ermöglichende, weitere Stellung geschaltet. In der weiteren Stellung ist die Haltebremse 14 vorliegend vollständig oder zumindest teilweise gelöst, sodass das bewegbare Element 3 unter besonders geringem Widerstand bewegt werden kann.

Um den Einrichtungsdatensatz 11 in Schritt c) zu erfassen, werden jeweilige Sensorwerte des dem Bewegungsautomaten zugeordneten Bewegungssensors 15 herangezogen.

Der Bewegungsverlauf 9 umfasst einen Geschwindigkeitsverlauf sowie einen Beschleunigungsverlauf des bewegbaren Elements 3. Der Geschwindigkeitsverlauf und der Beschleunigungsverlauf charakterisieren dabei die Dynamik und damit die Zeitabhängigkeit des Bewegungsverlaufs.

Der Geschwindigkeitsverlauf ist dabei proportional zu einem, sich über der Zeit ändernden Arbeitsgeschwindigkeitsverlauf des bewegbaren Elements 3.

Der beim Einrichten eingestellte Geschwindigkeitsverlauf des bewegbaren Elements und der zu dem Geschwindigkeitsverlauf proportionale Arbeitsgeschwindigkeitsverlauf des bewegbaren Elements ändern sich jeweils über der Zeit und über dem Bewegungsverlauf.

Der Beschleunigungsverlauf ist hingegen proportional zu einem, sich über der Zeit ändernden Arbeitsbeschleunigungsverlauf des bewegbaren Elements 3.

Der beim Einrichten eingestellte Beschleunigungsverlauf des bewegbaren Elements und der zu dem Beschleunigungsverlauf proportionale Arbeitsbeschleunigungsverlauf des bewegbaren Elements ändern sich jeweils über der Zeit und über dem Bewegungsverlauf.

Beim automatisierten Betrieb (nach erfolgtem Einrichten) des Bewegungsautomaten 2 kann letzterer gemäß dem Bewegungsverlauf 9, gemäß dem Arbeitsgeschwindigkeitsverlauf sowie gemäß dem Arbeitsbeschleunigungsverlauf bewegt werden, indem der Einrichtungsdatensatz 11 beim automatisierten Betrieb zum Bewegen des bewegbaren Elements 3 und damit des Bewegungsautomaten 2 verwendet wird.

Die vorliegende Einrichtungsanordnung 1 ermöglicht ein zuverlässiges Einrichten sowie eine zuverlässige Überwachung des Delta-Pickers 2 (Bewegungsautomat) mittels des SCARA-Roboters 6 (Führungsvorrichtung), obwohl der Delta-Picker 2 ein besonders hohes Beschleunigungsvermögen aufweist. Durch das Führen des bewegbaren Elements 3 mittels des bewegbaren Führungselement 7 beim Einrichten des Delta-Pickers 2 können Gefahr bringende Situationen, zu welchen beispielsweise ein unkontrolliertes, bereichsweises Ausbrechen des Delta Pickers 2 aus dem Arbeitsbereich 7 und/oder ein Überschreiten eines Geschwindigkeitsgrenzwerts des Bewegungsautomaten 2 gehört, vermieden werden.

Durch den im Vergleich zum Delta-Picker 2 dynamisch trägeren SCARA-Roboter 6 kann ein rechtzeitiges, insbesondere frühzeitiges Stoppen des bewegbaren Elements 3 des Delta-Pickers 2 während des Einrichtens bewirkt werden, ohne dass sicherheitsrelevante Grenzwerte überschritten werden.

Dadurch ist es ermöglicht, den Bewegungsautomaten 2 beispielsweise besonders einfach einzurichten und dabei manuell einzelne Punkte des Bewegungsverlaufs 9 anzufahren um dem Bewegungsautomaten 2 dadurch den Bewegungsverlauf 9 vorzugeben.

Ein besonderer Vorteil besteht darin, dass durch die Führungsvorrichtung 6 darauf verzichtet werden kann, den Bewegungsautomaten 2 während des Einrichtens in einer räumlich von einer Bedienperson abgetrennten Zelle zu bewegen. Die Bedienperson kann beim Einrichten somit besonders nahe an den Bewegungsautomaten 2 herantreten und in den Arbeitsbereich 8 eindringen ohne dabei Gefahr zu laufen, durch eine unkontrollierte Bewegung des Bewegungsautomaten 2 verletzt zu werden.

Nachfolgend wird das Verfahren zum Einrichten des Bewegungsautomaten 2 nochmals kurz zusammengefasst:
Vor Beginn des Einrichtens kann der Bewegungsautomat 2 über das bewegbare Element 3 mit dem bewegbaren Führungselement 7 und damit mit der Führungsvorrichtung 6 gekoppelt werden.

Dadurch wird der Bewegungsautomat 2 an einem vordefinierten Greifpunkt gehalten bzw. fixiert.

Jeweilige, die einzelnen Glieder 5 miteinander verbindende Antriebsachsen des Bewegungsautomaten 2 können durch Deaktivieren der Antriebsvorrichtung 13 sicher abgeschaltet werden, wobei beispielsweise eine Energiezufuhr zu der Antriebsvorrichtung 13 getrennt werden kann. Durch das Trennen der Energiezufuhr kann die Antriebsvorrichtung 13 in einen besonders sicheren, sogenannten STO-Zustand (STO = Safe Torque Off) und damit in einen Zustand, in welchem die Antriebsvorrichtung 13 kein Drehmoment erzeugen kann, geschaltet werden.

Da das bewegbare Element 3 durch das bewegbare Führungselement 7 gehalten wird, kann zudem die Haltebremse 14 gelöst werden, ohne dass das bewegbare Element 3 infolge der Schwerkraft F_G nach unten fällt.

Jeweilige Antriebe der Führungsvorrichtung 6 bleiben während des Verfahrens aktiv, wodurch das bewegbare Element 3 des Bewegungsautomaten 2 durch die Kraftausübung mittels des bewegbaren Führungselements 7 der Führungsvorrichtung 6 entlang des Bewegungsverlaufs 9 geführt werden kann. Das bewegbare Element 3 wird dann sozusagen passiv zusammen mit dem aktiv angetriebenen (bewegten) Führungselement 7 mitbewegt.

Während des Einrichtens kann die Führungsvorrichtung 6 auch manuell bedient werden.

Während des Verfahrens können verschiedene Koordinatenpunkte entlang des Bewegungsverlaufs 9 im Arbeitsbereich 8 angefahren und über den Bewegungssensor 15 und das Steuergerät 10 aufgezeichnet werden. Die aufzuzeichnenden Koordinatenpunkte des Bewegungsverlaufs 9 können dabei direkt anhand der jeweiligen Sensorwerte des Bewegungssensors 15 ermittelt werden. Dadurch ist der Einrichtungsdatensatz 11 in vorteilhafter Weise auf ein dem Bewegungsautomaten 2 zugeordnetes Koordinatensystem bezogen.

Alternativ dazu können die aufzuzeichnenden Koordinatenpunkte auch aus jeweiligen Geberwerten eines hier nicht weiter dargestellten Sensors der Führungsvorrichtung 6 ermittelt und beispielsweise durch Koordinatentransformation auf das dem Bewegungsautomaten 2 zugeordnete Koordinatensystem umgerechnet werden.

Das (kartesische) Bewegen der Führungsvorrichtung 6 und damit des bewegbaren Führungselements 7 kann durch eine Sicherheitssteuerung überwacht werden.

## Patentansprüche

1. Verfahren zum Einrichten eines Bewegungsautomaten (2), umfassend zumindest die Schritte:
a) Koppeln eines bewegbaren Elements (3) des Bewegungsautomaten (2) mit einem bewegbaren Führungselement (7) einer Führungsvorrichtung (6), wobei die Führungsvorrichtung (6) als ein mehrgliedriger Führungsroboter ausgebildet ist;
b) Kraftausübung auf das bewegbare Element (3) durch das bewegbare Führungselement (7) durch Betreiben der Führungsvorrichtung (6), wodurch das bewegbare Element (3) mittels des Führungselements (7) entlang eines vorbestimmten Bewegungsverlaufs (9) geführt bewegt wird, wobei das bewegbare Element (3) vor oder während der Kraftausübung in Schritt b) in einen Passivzustand versetzt wird, in welchem das bewegbare Element (3) von einer zum Bewegen des bewegbaren Elements (3) ausgebildeten Antriebsvorrichtung (13) des Bewegungsautomaten (2) entkoppelt ist;
c) Erfassen eines den Bewegungsverlauf (9) charakterisierenden Einrichtungsdatensatzes (11) und dadurch Einrichten des Bewegungsautomaten (2), wobei der Bewegungsverlauf (9) wenigstens einen Geschwindigkeitsverlauf umfasst und der wenigstens eine Geschwindigkeitsverlauf proportional zu einem sich über der Zeit ändernden Arbeitsgeschwindigkeitsverlauf des bewegbaren Elements (3) ist.

2. Verfahren nach Anspruch 1, wobei der Bewegungsverlauf (9) wenigstens einen Beschleunigungsverlauf des bewegbaren Elements (3) umfasst.

3. Verfahren nach Anspruch 1 oder 2, **dadurch gekennzeichnet, dass** vor oder während der Kraftausübung in Schritt b) wenigstens eine Haltebremse (14) des Bewegungsautomaten (2) von einer, eine Bewegung des bewegbaren Elements (3) unterbindenden Bremsstellung in eine, die Bewegung des bewegbaren Elements (3) ermöglichende, weitere Stellung geschaltet wird.

4. Verfahren nach einem der vorhergehenden Ansprüche, **dadurch gekennzeichnet, dass** das bewegbare Element (3) während der Kraftausübung in Schritt b) entgegen einer auf das bewegbare Element (3) wirkenden Schwerkraft (F G) durch das Führungselement (7) gehalten wird.

5. Verfahren nach einem der vorhergehenden Ansprüche, **dadurch gekennzeichnet, dass** beim Erfassen des Einrichtungsdatensatzes (11) in Schritt c) wenigstens ein Sensorwert eines dem Bewegungsautomaten zugeordneten Bewegungssensors (15) herangezogen wird.

6. Verfahren nach einem der vorhergehenden Ansprüche, **dadurch gekennzeichnet, dass** als der Bewegungsautomat (2) ein mehrachsiger Roboter, insbesondere ein Delta-Picker, herangezogen wird.

7. Verfahren nach einem der vorhergehenden Ansprüche, **dadurch gekennzeichnet, dass** der wenigstens eine Beschleunigungsverlauf proportional zu einem, sich über der Zeit ändernden Arbeitsbeschleunigungsverlauf des bewegbaren Elements (3) ist.

8. Einrichtungsanordnung (1), welche einen Bewegungsautomaten (2), mit einem bewegbaren Element (3) sowie eine als ein mehrgliedriger Führungsroboter ausgebildete Führungsvorrichtung (6) mit einem bewegbaren Führungselement (7) umfasst, bei welcher das bewegbare Element (3) des Bewegungsautomaten (2) mit dem bewegbaren Führungselement (7) der Führungsvorrichtung (6) gekoppelt ist, welche zur Kraftausübung auf das bewegbare Element (3) mittels des bewegbaren Führungselements (7) durch Betreiben der Führungsvorrichtung (6) ausgebildet ist, wodurch das bewegbare Element (3) durch das bewegbare Führungselement (7) entlang eines vorbestimmten Bewegungsverlaufs (9) geführt bewegbar ist, und mittels welcher ein den Bewegungsverlauf (9) charakterisierender Einrichtungsdatensatz (11) erfassbar und dadurch der Bewegungsautomat (2) einrichtbar ist, wobei das bewegbare Element (3) vor oder während der Kraftausübung in einen Passivzustand versetzt ist, in welchem das bewegbare Element (3) von einer zum Bewegen des bewegbaren Elements (3) ausgebildeten Antriebsvorrichtung (13) des Bewegungsautomaten (2) entkoppelt ist und wobei der Bewegungsverlauf (9) wenigstens einen Geschwindigkeitsverlauf umfasst und der wenigstens eine Geschwindigkeitsverlauf proportional zu einem sich über der Zeit ändernden Arbeitsgeschwindigkeitsverlauf des bewegbaren Elements (3) ist.

9. Einrichtungsanordnung nach Anspruch 8, wobei der Bewegungsverlauf (9) wenigstens einen Beschleunigungsverlauf des bewegbaren Elements (3) umfasst.

## Claims

1. Method for setting up an automatic movement machine (2), comprising at least the steps:
a) coupling a movable element (3) of the automatic movement machine (2) to a movable guide element (7) of a guide device (6), wherein the guide device (6) is designed as a multi-axis guide robot;
b) exerting a force on the movable element (3) by means of the movable guide element (7) by operating the guide device (6), as a result of which the movable element (3) guided by means of the guide element (7) is moved along a predetermined movement profile (9), wherein, before or during the exertion of force in step b), the movable element (3) is placed in a passive state, in which the movable element (3) is uncoupled from a drive device (13) of the automatic movement machine (2) that is designed to move the movable element (3);
c) acquiring a setup data set (11) characterizing the movement profile (9) and setting up the automatic movement machine (2) as a result, wherein the movement profile (9) comprises at least one speed profile, and the at least one speed profile is proportional to a working speed profile of the movable element (3) that changes over time.

2. Method according to Claim 1, wherein the movement profile (9) comprises at least one acceleration profile of the movable element (3).

3. Method according to Claim 1 or 2, **characterized in that**, before or during the exertion of force in step b), at least one holding brake (14) of the automatic movement machine (2) is switched from a braking position suppressing a movement of the movable element (3) into a further position permitting the movement of the movable element (3).

4. Method according to one of the preceding claims, **characterized in that**, during the exertion of force in step b), the movable element (3) is held by the guide element (7) counter to a gravitational force (F_G) acting on the movable element (3) .

5. Method according to one of the preceding claims, **characterized in that**, when acquiring the setup data set (11) in step c), at least one sensor value from a movement sensor (15) associated with the automatic movement machine is used.

6. Method according to one of the preceding claims, **characterized in that** a multi-axis robot, in particular a delta picker, is used as the automatic movement machine (2).

7. Method according to one of the preceding claims, **characterized in that** the at least one acceleration profile is proportional to a working acceleration profile of the movable element (3) that changes over time.

8. Setup assembly (1), which comprises an automatic movement machine (2), having a movable element (3) and a guide device (6) designed as a multi-axis guide robot and having a movable guide element (7), in which the movable element (3) of the automatic movement machine (2) is coupled to the movable guide element (7) of the guide device (6), which is designed to exert a force on the movable element (3) by means of the movable guide element (7) by operating the guide device (6), as a result of which the movable element (3) guided by the movable guide element (7) can be moved along a predetermined movement profile (9), and by means of which a setup data set (11) characterizing the movement profile (9) can be acquired and the automatic movement machine (2) can be set up as a result, wherein, before or during the exertion of force, the movable element (3) is placed in a passive state, in which the movable element (3) is uncoupled from a drive device (13) of the automatic movement machine (2) that is designed to move the movable element (3), and wherein the movement profile (9) comprises at least one speed profile, and the at least one speed profile is proportional to a working speed profile of the movable element (3) that changes over time.

9. Setup assembly according to Claim 8, wherein the movement profile (9) comprises at least one acceleration profile of the movable element (3).

## Revendications

1. Procédé d'installation d'un automate de mouvement (2), comprenant au moins les étapes de :
a) couplage d'un élément mobile (3) de l'automate de mouvement (2) à un élément de guidage mobile (7) d'un dispositif de guidage (6), dans lequel le dispositif de guidage (6) est conçu comme un robot de guidage à plusieurs sections ;
b) exercice d'une force sur l'élément mobile (3) par l'élément de guidage mobile (7) par actionnement du dispositif de guidage (6), l'élément mobile (3) étant ainsi déplacé d'une manière guidée au moyen de l'élément de guidage (7) le long d'une trajectoire du mouvement prédéterminée (9), dans lequel l'élément mobile (3) est, avant ou pendant l'exercice d'une force à l'étape b), mis dans un état passif, dans lequel l'élément mobile (3) est découplé d'un mécanisme moteur (13), conçu pour déplacer l'élément mobile (3), de l'automate de mouvement (2) ;
c) saisie d'un ensemble de données d'installation (11) caractérisant la trajectoire du mouvement (9) et, par ce moyen, installation de l'automate de mouvement (2), dans lequel la trajectoire du mouvement (9) comprend au moins une courbe de vitesse et la au moins une courbe de vitesse est proportionnelle à une courbe de vitesse du travail, se modifiant avec le temps, de l'élément mobile (3).

2. Procédé selon la revendication 1, dans lequel la trajectoire du mouvement (9) comprend au moins une courbe d'accélération de l'élément mobile (3).

3. Procédé selon la revendication 1 ou 2, **caractérisé en ce qu'**avant ou pendant l'exercice d'une force à l'étape b), au moins un frein d'arrêt (14) de l'automate de mouvement (2) est commuté d'une position de freinage empêchant un mouvement de l'élément mobile (3) à une autre position permettant le mouvement de l'élément mobile (3).

4. Procédé selon l'une des revendications précédentes, **caractérisé en ce que** l'élément mobile (3), pendant l'exercice d'une force à l'étape b), est maintenu par l'élément de guidage (7) à l'encontre d'une force de gravité (F_G) agissant sur l'élément mobile (3).

5. Procédé selon l'une des revendications précédentes, **caractérisé en ce que** lors de la saisie de l'ensemble des données d'installation (11) à l'étape c), au moins une valeur de capteur d'un capteur de mouvement (15) affecté à l'automate de mouvement est utilisée.

6. Procédé selon l'une des revendications précédentes, **caractérisé en ce qu'**un robot multiaxial, plus particulièrement un Delta-Picker, est utilisé comme automate de mouvement (2).

7. Procédé selon l'une des revendications précédentes, **caractérisé en ce que** la au moins une courbe d'accélération est proportionnelle à une courbe d'accélération du travail se modifiant avec le temps, de l'élément mobile (3).

8. Dispositif d'installation (1), lequel comprend un automate de mouvement (2), avec un élément mobile (3) ainsi qu'un dispositif de guidage (6) conçu comme un robot de guidage à plusieurs sections avec un élément de guidage mobile (7), dans lequel l'élément mobile (3) de l'automate de mouvement (2) est couplé à l'élément de guidage mobile (7) du dispositif de guidage (6), lequel est conçu pour exercer une force sur l'élément mobile (3) au moyen de l'élément de guidage mobile (7) par actionnement du dispositif de guidage (6), ce par quoi l'élément mobile (3) est déplacé d'une manière guidée par l'élément de guidage mobile (7) le long d'une trajectoire du mouvement prédéterminée (9), et au moyen duquel un ensemble de données d'installation (11) caractérisant la trajectoire du mouvement (9) peut être saisi et, par ce moyen, l'automate de mouvement (2) peut être installé, dans lequel l'élément mobile (3) avant ou pendant l'exercice d'une force est mis dans un état passif, dans lequel l'élément mobile (3) est découplé d'un mécanisme moteur (13), conçu pour déplacer l'élément mobile (3), de l'automate de mouvement (2) et dans lequel la trajectoire du mouvement (9) comprend au moins une courbe de vitesse et la au moins une courbe de vitesse est proportionnelle à une courbe de vitesse du travail, se modifiant avec le temps, de l'élément mobile (3).

9. Dispositif d'installation selon la revendication 8, dans lequel la trajectoire du mouvement (9) comprend au moins une courbe d'accélération de l'élément mobile (3).
